# EUROPEAN PATENT APPLICATION

(11) **EP 3 747 790 A1**
(43) Date of publication of application: **09.12.2020**
(21) Application number: 19748121.1
(22) Date of filing: 28.01.2019
(51) Int. Cl.: B65D 8/16, B21D 51/26, B21D 51/44, B32B 15/01, B32B 15/09, B32B 15/098, B65D 25/14, C12G 1/04

(54) **ALUMINUM CONTAINER FOR WINE**

(30) Priority: 02.02.2018 JP 2018017418
(71) Applicant: Toyo Seikan Co., Ltd., Tokyo 141-8640 (JP)
(72) Inventor: KITOU, Satoru, Yokohama-shi, Kanagawa 230-0001 (JP); NAGAI, Nobuhiko, Yokohama-shi, Kanagawa 230-0001 (JP); YOSHINO, Chiaki, Yokohama-shi, Kanagawa 230-0001 (JP); TAKEHARU, Hitoshi, Yokohama-shi, Kanagawa 230-0001 (JP); YAOI, Etsuko, Yokohama-shi, Kanagawa 230-0001 (JP)
(74) Representative: J A Kemp LLP
(86) International application number: PCT/JP2019/002771
(87) International publication number: WO 2019/151189

(57) **Abstract**

The present invention relates to an aluminum wine container including an aluminum can body and an aluminum can lid that covers an opening of the can body. A polyester resin coating is formed on the inner surface of the aluminum can body, and the thickness of the coating is not less than 4 µm at the barrel portion of the can body. And a coating film of a polyester/phenolic coating material having a thickness of not less than 6 µm is formed on the inner surface of the aluminum can lid. Consequently, corrosion of the container and deterioration of wine flavor are effectively prevented without using a special scavenger for capturing sulfurous acid even in a case where the container is filled with wine that contains sulfite and sealed.

## Description

### Technical Field:

The present invention relates to an aluminum wine container. More specifically, the present invention relates to an aluminum wine container, where corrosion of the container and deterioration in flavor of the wine can be effectively prevented or decreased even when the container is filled with wine containing sulfite as an antioxidant and sealed.

### Background Art:

Wine is easily oxidized and its flavor is easily impaired by the oxidation. For this reason, usually wine is filled in an oxygen-impermeable glass bottle and sealed for storage and distribution. On the other hand, since the glass bottle is heavy and vulnerable to shock, it is desired that the wine be filled and sealed in a container that is lightweight and resistant to shock.

Since a metal container is excellent in gas barrier property similarly to a glass bottle and has a light-shielding property, there has been a proposal of filling and sealing wine in such a metal container. However, wine usually contains sulfite as an antioxidant, and sulfurous acid highly corrosive to metals to cause corrosion in the metal. Moreover, hydrogen sulfide generated by reaction with the metal may impair the flavor of the wine.

In order to solve the problem of the metal container, Patent Document 1 below proposes a metal wine can comprising a resin layer formed on the inner surface of the can, and the resin layer comprises calcium carbonate added as a scavenger to react with sulfurous acid. Patent Document 2 below proposes a coating resin composition for a can body and a can lid containing a polyester resin, a phenol resin, and zinc oxide. This document describes that corrosion resistance and content retention can be exhibited because the zinc oxide captures a sulfuric acid-based compound. Patent Document 3 describes a canned wine that prevents corrosion of metal and flavor deterioration by decreasing the sulfurous acid concentration in wine to 50 ppm or less.

### Prior Art Documents:

### Patent Documents:

[Patent Document 1] JP 2006-62688 A
[Patent Document 2] JP 2012-31223 A
[Patent Document 3] JP H02-76565 A

### Summary of the Invention:

### Problems to be Solved by the Invention:

Patent Document 1 relates to a technique of capturing sulfurous acid that has permeated through the resin layer by calcium carbonate contained in an adhesive layer of the resin layer, but this technique is not satisfactory from the viewpoint of productivity and economic efficiency.

When the coating composition described in Patent Document 2 is used, it is necessary to form a coating film after shaping a metal can. Therefore, the technique is not yet sufficiently satisfactory from the viewpoint of productivity, and similarly to the case of Patent Document 1, Patent Document 2 requires a scavenger for capturing sulfurous acid, and therefore, Patent Document 2 is not satisfactory from the viewpoint of economic efficiency.

In a case of using the can described in Patent Document 3, it is impossible to fill the can with wine having a free sulfurous acid concentration of 50 ppm or more.

Accordingly, it is an object of the present invention to provide an aluminum wine container to effectively prevent corrosion of the container and deterioration of the wine flavor even when the wine containing sulfite is filled and sealed without using a special scavenger for capturing sulfurous acid.

Another object of the present invention is to provide a packed wine free from quality loss, lightweight, and excellent in handleability.

### Means for solving the problems:

The present invention provides an aluminum wine container including an aluminum can body having a barrel portion, and an aluminum can lid that covers an opening of the can body. The aluminum can body has an inner surface on which a polyester resin coating is formed, the coating has a thickness of not less than 4 µm at the barrel portion, and the aluminum can lid has an inner surface on which a coating film of a polyester/phenolic coating material having a thickness of not less than 6 µm is formed.

It is preferable for the aluminum wine container of the present invention that:
1. the polyester resin coating at the barrel portion has a thickness in the range of 4 to 30 µm;
2. the coating film on the can lid has a thickness in the range of 6 to 20 µm;
3. the polyester resin coating includes an ethylene terephthalate-based polyester resin;
4. the polyester/phenolic coating material includes a coating composition containing a polyester resin as a base resin and a resol-type phenol resin as a curing agent;
5. the can body is a seamless can shaped by drawing, bend-stretching and/or ironing a polyester resin coated aluminum sheet; and
6. the can lid is an easy opening end with a stay-on tab.

The present invention further provides packed wine, which is prepared by filling the aluminum wine container with wine and sealing the container.

The packed wine of the present invention is the wine containing sulfite and suitably filled and sealed.

### Effect of the Invention:

The aluminum wine container of the present invention is provided by combining an aluminum can body having an inner surface coating of a polyester resin film of a specific thickness and an aluminum can lid having a polyester/phenolic inner surface coating film of a specific thickness. Even if this container is filled with sulfite-containing wine and sealed, permeation of sulfurous acid through the resin coating of the aluminum can body and the coating film of the aluminum can lid can be prevented or decreased, so that it is possible to effectively prevent corrosion of the aluminum and the deterioration in flavor over a long period of time.

Another advantage is that there is no necessity of blending a scavenger for capturing sulfurous acid in the inner surface coating. Further, adhesion failure of the polyester resin coating may not occur even after severe workings such as draw-ironing. An aluminum container provided in this manner is excellent in productivity and economic efficiency, lightweight and excellent in handleability while being free from the risk of damage.

Further, the polyester resin coated aluminum can body is excellent in elution resistance, namely, substantially no elution of organic component from the coating occurs. Moreover, since generation of hydrogen sulfide due to the reaction of the sulfurous acid and the metal is also prevented or decreased. These synergistic effects can prevent deterioration in the wine flavor.

The above-described effects of the aluminum wine container of the present invention are also demonstrated by the results of Examples described later. Specifically, Comparative Examples 1 and 2 each refers to a case of using a polyester resin coated aluminum can body of the present invention, in combination with an aluminum can lid having an epoxy/acrylic coating film. In this case, the can lid is corroded even though the coating film thickness is within the aforementioned range. Comparative Example 3 refers to a case where the polyester resin coating has a thickness less than the range. In this case, corrosion in the can body does not occur, but the wine flavor deteriorates. Comparative Example 4 refers to a case of forming an epoxy/acrylic coating film on both the can body and the can lid. In this case, the wine flavor deteriorates considerably and corrosion occurs both on the can body and the can lid. In Comparative Example 5, an aluminum can lid having an epoxy/phenolic coating film of the present invention is used. Even in this case, when an aluminum can body having an epoxy/acrylic coating film is used in combination therewith, the wine flavor deteriorates considerably, and corrosion occurs in the can body. On the other hand, in Example 1, a polyester resin coated aluminum can body and an aluminum can lid having an epoxy/phenolic coating film are used in combination according to the present invention. In this case, satisfactory results are obtained both in the sensory evaluation (wine flavor retention) and corrosion resistance for the can body and the can lid, contrarily to Comparative Examples.

### Brief Description of the Drawings:

[Fig. 1]: a set of photographs showing the inner surface of a seamless can of Example 1, the photographs were taken six months after filling the can with wine, sealing and keeping at a constant temperature of 23°C, Fig. 1(A) showing a can neck portion and Fig. 1(B) showing a can barrel straight portion;
[Fig. 2]: a set of photographs showing the inner surface of a seamless can of Comparative Example 4, the photographs were taken six months after filling the can with wine, sealing and keeping at a constant temperature of 23°C, Fig. 2(A) showing a can neck portion and Fig. 2(B) showing a can barrel straight portion;
[Fig. 3] : a schematic view showing a device used in Experimental Example 3; and
[Fig. 4]: a graph showing the amount of sulfurous acid permeation measured according to Experimental Example 3.

### Mode for Carrying Out the Invention:

### (Aluminum wine container)

An aluminum wine container of the present invention is composed of an aluminum can body and an aluminum can lid that covers the opening of the can body. On the inner surface of the aluminum can body, a polyester resin coating is formed, and the coating has a thickness of not less than 4 µm, preferably in the range of 4 to 30 µm at the barrel portion of the can body. On the inner surface of the aluminum can lid, a coating film of a polyester/phenolic coating material having a thickness of not less than 6 µm, preferably 6 to 20 µm, is formed.

If the thickness of the inner surface resin coating on the aluminum can body is less than the above range, permeation of the sulfurous acid through the resin coating cannot be prevented, and the flavor retention may deteriorate. If the thickness of the inner surface resin coating on the aluminum can body is more than the above range, the economic efficiency may deteriorate and furthermore, adhesion failure of the resin coating may occur during the shaping process.

If the thickness of the inner surface coating film on the aluminum can lid is less than the above range, the corrosion resistance may be impaired. And if the thickness of the inner surface coating film on the aluminum can lid is more than the above range, the economic efficiency may deteriorate. In addition, sagging of the coating material and blisters occurring during formation of the coating film may hinder formation of a normal coating film, and it may hinder formation of a coating film capable of preventing permeation of sulfurous acid.

### [Aluminum can body]

The aluminum can body used for the aluminum wine container of the present invention is not particularly limited in its shape and formation method as long as it has a polyester resin coating having a thickness of not less than 4 µm, preferably in the range of 4 to 30 µm at the barrel portion of the can body, but preferably it is a seamless can of a polyester resin coated aluminum metal sheet shaped so that the polyester resin coating makes the inner surface.

The thickness of the polyester resin coating defined in the present invention indicates the thickness at the part of the thinnest resin coating on the can body. Specifically, in a seamless can formed through working such as drawing. ironing, it indicates the thickness at the can body barrel portion at which the polyester resin coated metal sheet has the minimal thickness. In other words, the polyester resin coating also has the minimal thickness at this portion as a result of the severe working for shaping.

A polyester resin coated aluminum sheet used for shaping an aluminum can body of the present invention is prepared by coating a polyester resin described later on at least a surface of an aluminum sheet, namely a surface to make the inner surface of the can.

As the aluminum sheet, an aluminum sheet made of pure aluminum or an aluminum alloy (both of which may be referred to as "aluminum sheet" hereinafter) can be used.

It is preferable that the aluminum sheet is subjected to a conventionally known surface treatment in order to improve the adhesion to the resin coating and corrosion resistance. Preferably, it is an aluminum sheet surface-treated with chromate phosphate or an organic/inorganic agent containing zirconium, though the present invention is not limited to these examples.

It is preferable that the thickness of the aluminum sheet is in the range of 0.15 to 0.40 mm, and particularly, 0.20 to 0.30 mm.

The polyester resin constituting the polyester resin coating to be applied to the aluminum sheet is preferably a polyester resin based on ethylene terephthalate, where not less than 80 mol% or particularly not less than 90 mol% of the aromatic carboxylic acid component is a terephthalic acid component, and not less than 80 mol% and particularly not less than 90 mol% of the alcoholic component is ethylene glycol (hereinafter, this may be called simply "PET resin". The polyester resin may be homopolyethylene terephthalate, copolymerized polyester, or a blend resin of two or more thereof.

Examples of the carboxylic acid component other than the terephthalic acid component include isophthalic acid, naphthalenedicarboxylic acid, ρ-β-oxyethoxybenzoic acid, biphenyl-4,4'-dicarboxylic acid, diphenoxyethane-4,4'-dicarboxylic acid, 5-sodium sulfoisophthalic acid, hexahydroterephthalic acid, adipic acid, sebacic acid, trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentane tetrocarboxylic acid, biphenyl-3,4,3',4'-tetracarboxylic acid, and dimer acid. It is particularly preferred to contain isophthalic acid, dimer acid.

Examples of the alcoholic components other than ethylene glycol include propylene glycol, 1,4-butanediol, neopentylglycol, 1,6-hexylene glycol, diethylene glycol, triethylene glycol, cyclohexanedimethanol, bisphenol-A ethylene oxide adduct, glycerol, trimethylol propane, pentaerythritol, dipentaerythritol, and sorbitan.

It is required that the polyester resin have a molecular weight in a range for enabling film formation. The intrinsic viscosity (IV) measured using a solvent of a mixture of phenol/tetrachloroethane is not less than 0.55 dL/g and particularly in the range of 0.6 to 1.0 dL/g, from the viewpoint of barrier properties against corrosive components and mechanical properties.

The polyester resin coating is not limited to a single layer but it may also be a multilayer. It can have a two-layer structure where the surface layer is composed of a homopolymer PET or a copolymer PET having an isophthalic acid content of not more than 5 mol%, and the lower layer is composed of a copolymer PET having an isophthalic acid content of 5 to 15 mol% and a dimer acid content of 1 to 6 mol%, and the thickness ratio of the surface layer to the lower layer is in the range of 2:8 to 8:2, though the present invention is not limited to this example.

In a case of shaping a can through drawing-bend-stretching and/or ironing, the polyester resin coating preferably has a thickness in the range of 8 to 30 µm in the state of a polyester resin coated aluminum sheet for the purpose of setting the thickness of the polyester resin inner coating at the barrel portion of the shaped can to be within the aforementioned range. In a case of forming the polyester resin coating as a multilayer, the total thickness is preferably within the range.

Further, it is possible to coat the polyester resin on the aluminum sheet by a conventionally known lamination method. Coating without use of an adhesive can be provided preferably by lamination of a cast film (multilayer cast film) or extrusion coating (co-extrusion coating). It should be noted however, that use of an adhesive is not limited, and a conventionally known primer can be used for adhesion to the aluminum sheet.

On the outer surface side of the polyester resin coated aluminum sheet, any conventionally known coating material for a can or a polyester resin coating can be formed without any particular limitation.

In the present invention, the above-described polyester resin coated aluminum sheet can be manufactured by subjecting it to conventional known workings such as drawing-redrawing, drawing·bend-stretching, drawing·bend-stretching·ironing, or drawing·ironing. It is particularly preferable that the shaping is conducted by drawing·bend-stretching, and/or ironing. It is preferable that the barrel portion of the can body is made thinner in comparison with the bottom portion by bend-stretching and/or ironing so that the thickness becomes 20 to 95%, or particularly 30 to 85% of the thickness of the substrate of the polyester resin coated aluminum sheet.

The thus shaped can body can be trimmed, heat-treated, neck-in worked, flanged, and printed on the outer surface of the can body if necessary, by conventionally known methods, whereby a seamless can to be provided with a can lid by double seaming as described below is provided.

### [Aluminum can lid]

There is no particular limitation on the shape and the shaping method of the aluminum can lid used for the aluminum wine container of the present invention as long as the lid is provided with a polyester/phenolic inner surface coating film having a thickness of not less than 6 µm, preferably in the range of 6 to 20 µm.

A coated aluminum sheet having a polyester/phenolic coating film used for shaping an aluminum can lid is formed by coating an aluminum sheet, which can be used for shaping the aforementioned aluminum can body, with a coating composition containing a polyester resin as a base resin and a phenol resin as a curing agent.

In the present invention, the coating composition capable of forming the aforementioned polyester/phenolic coating film is not particularly limited as long as it is a coating composition containing a polyester resin as a base resin and a phenol resin as a curing agent.

For instance, JP 2003-321646 A describes an aqueous coating composition containing a carboxyl group-containing aromatic polyester resin having an acid value of 10 to 30 mgKOH/g and a number average molecular weight of 3000 to 10000, and a phenol resin derived from meta cresol. And JP 2013-249376 A describes a coating composition containing a mixed polyester resin, a resol-type phenol resin and a curing catalyst. The mixed polyester resin is prepared by mixing a polyester resin (A) having an acid value of 2 to 50 mgKOH/g and a glass transition temperature (Tg) of 35 to 100°C, and a polyester resin (B) having an acid value of 0 to 50 mgKOH/g a glass transition temperature (Tg) of -20 to 25°C. The content of the resol-type phenol resin is 1 to 30 parts by weight relative to 100 parts by weight of the resin solid of the mixed polyester resin, and the content of the curing catalyst is 1 to 30 parts by weight relative to 100 parts by weight of the whole resin solids. These compositions can be used preferably though the present invention is not limited to these examples.

In the present invention, as described above, this coating composition is coated on an aluminum sheet so that a coating film thickness will be not less than 6 µm, and particularly 6 to 20 µm. The aluminum sheet used here can be the same as that used for the aluminum can body.

There is no particular limitation on the method for coating the coating composition onto the aluminum sheet, but any conventionally known methods can be employed, and the examples include spray coating, roll coater coating, and dip coating. The coating film is baked usually at a temperature of 100 to 300°C for 5 seconds to 30 minutes, and preferably at a temperature of 150 to 270°C for 15 seconds to 15 minutes.

The aluminum can lid of the present invention can be shaped by a known method, except that the aforementioned lid material is used. That is, it is possible to punch a coated aluminum sheet into a predetermined shape and dimensions, then to press the sheet to have a shape of lid, using a press die. Examples of the aluminum lid used in the present invention include an easy opening end with a stay-on tab (SOT), an easy opening end with the full-open tab and the like, though the present invention is not limited thereto, and an SOT lid is particularly preferred.

### (Packed wine)

The packed wine of the present invention is prepared by filling a container composed of the aluminum can body and the aluminum can lid with wine and sealing the container. As mentioned above, even when the wine contains sulfite as an antioxidant, substantially no corrosion occurs on the inner surface and the wine flavor is prevented from deterioration for a long period of time.

Any conventionally known wines such as red wine, white wine, and rose wine can be contained without any particular limitation. The container can be filled even with a wine having a free sulfurous acid concentration of 50 ppm or more. The container is also compatible with sparkling wine.

### Examples:

### (Formation of can body)

As an aluminum sheet, an aluminum sheet having a surface treated with chromate surface (thickness: 0.28 mm) was used.

This surface-treated aluminum sheet was heated to 250°C, and on both surfaces thereof, polyester resin films were thermal compression bonded via a laminate roll. Then, the sheet was immediately water-cooled to prepare a polyester resin coated aluminum sheet. As the polyester resin film to be applied on the inner surface of the can, a copolymerized PET resin film having an isophthalic acid content of 10 mol% and having a thickness shown in Table 1 was used. On the other surface to make the outer surface of the can, a copolymerized PET resin film having an isophthalic acid content of 12 mol% and having a thickness of 10 µm was applied.

Paraffin wax was electrostatically coated on both surfaces of the thus obtained polyester resin coated aluminum sheet. Later, the sheet was punched into a circular shape having a diameter of 156 mm to prepare a shallow-drawn cup. Subsequently, the shallow-drawn cup was subjected to redraw-ironing and dome-shaping, then its opening edge was trimmed. The cup was heat-treated at 201°C for 75 seconds and then at 210°C for 80 seconds. The open end was subjected to necking and flanging, so that a polyester resin coated aluminum seamless can having a capacity of 500 ml, 211 DIA at can barrel and 206 DIA at neck portion was formed.

The seamless can has a can body diameter of 66 mm and a can body height of 168 mm. The average sheet thickness reduction rate at the can side wall portion with respect to the original sheet thickness is 60%.

For comparison, a seamless can was formed from the aforementioned surface-treated aluminum sheet without coating the sheet with a polyester resin film. The epoxy-acrylic coating film having the thickness as shown in Table 1 was formed on the inner surface of the seamless can so as to form an aluminum seamless can having an inner coating film.

### (Formation of can lid)

A JIS A5182H19 aluminum alloy coil having a plate thickness of 0.26 mm was prepared. A polyester/phenolic coating material or an epoxy/acrylic coating material was coil-coated on a surface of the coil, i.e., a surface to make the inner surface, so that the dried coating film would have the thickness as shown in Table 1. Then, the coating film was baked in a gas oven to obtain a coated aluminum coil. Here, the peak temperature of the aluminum sheet was 260°C and the total heating time was 28 seconds. On the other surface of the aluminum sheet, i.e., the surface to make the outer surface, an epoxy/acrylic coating material different from the coating material for the inner surface was applied so that the dried film would have a thickness of 4 µm.

As the polyester/phenolic coating material, the coating material described in Example 8 of JP 2013-249376 A was used. This composition contained polyester (A) and polyester (B) at a weight ratio of 90:10. The polyester (A) had a glass transition temperature of 50°C, an acid value of 15 mgKOH/g, and a number average molecular weight of 17000. The polyester (B) had a glass transition temperature of 7°C, an acid value of 1 mgKOH/g, and a number average molecular weight of 18000. Relative to 100 parts by weight of these polyesters, 10 parts by weight of a crosslinking agent of resol-type phenol resin derived from meta cresol, and 0.1 parts by weight of curing catalyst of amine-block dodecylbenzene sulfonic acid were blended. As the epoxy/acrylic coating material to be coated on the surface to make the inner surface, the coating material described in Example 1 of WO 2010/013655 was used.

The coated aluminum coil was used to form a shell (lid for opening tab attachment) of 206 DIA by use of a shell-making machine. In the shell, the depth of the radius part of the reinforcing annular groove from the central panel was 2.5 mm, and the curvature radius at the radius part was 0.50 mm. This shell was subjected to riveting and scoring from the lid outer surface side (score remaining thickness: 95 µm), and attached with an opening tab so as to form a SOT lid.

**[Table 1]**

| | Inner surface resin film | | Sensory evaluation | | Corrosion resistance evaluation | |
|---|---|---|---|---|---|---|
| | Can barrel | Lid | Evaluation result | Panelist comment | Evaluation result | Details |
| Ex. 1 | Polyester film | Polyester/phenolic coating film | ○ | Slightly weaker fruitiness than initial but acceptable fruitiness | ○ | No corrosion |
| | (minimal thickness: 6 µm) | (minimal thickness: 8 µm) | | | | |
| Com. Ex. 1 | Polyester film | Epoxy/acrylic coating film | ○ | Slightly weaker fruitiness than initial but acceptable fruitiness | Δ | Corrosion on lid |
| | (minimal thickness: 6 µm) | (minimal thickness: 8 µm) | | | | |
| Com. Ex.2 | Polyester film | Epoxy/acrylic coating film | ○ | Slightly weaker fruitiness than initial but acceptable fruitiness | Δ | Corrosion on lid |
| | (minimal thickness: 4 µm) | (minimal thickness: 8 µm) | | | | |
| Com. Ex.3 | Polyester film | Epoxy/acrylic coating film | Δ | Slightly stronger bitterness and poor aftertaste compared to Ex.1, Com.Ex.1, and Com.Ex.2 | Δ | Corrosion on lid |
| | (minimal thickness: 3 µm) | (minimal thickness: 8 µm) | | | | |
| Com. Ex.4 | Epoxy/acrylic coating film | Epoxy/acrylic coating film | × | Strong bitterness and sourness, poor aftertaste | × | Corrosion on can barrel and lid |
| | (minimal thickness: 3 µm) | (minimal thickness: 8 µm) | | Slight scent of sulfides like shellfish | | |
| Com. Ex.5 | Epoxy/acrylic coating film | Polyester/phenolic coating film | × | Strong bitterness and sourness, poor aftertaste | Δ | Corrosion on can barrel |
| | (minimal thickness: 3 µm) | (minimal thickness: 8 µm) | | Slight scent of sulfides like shellfish | | |

| | | | | | | |
|---|---|---|---|---|---|---|
| Ex.: Example Com. Ex.: Comparative Example | | | | | | |

### (Experimental Example 1)

Each of the containers of Example 1 and Comparative Example 4 shown in Table 1 was filled with white wine (pH: 3.4, free sulfurous acid concentration: 80 ppm, total sulfurous acid concentration: 225 ppm) and sealed. The packed wine was stored for six months under a constant temperature condition of 23°C, and then, the can inner surface was observed. In the container of Example 1, corrosion was evidently prevented.

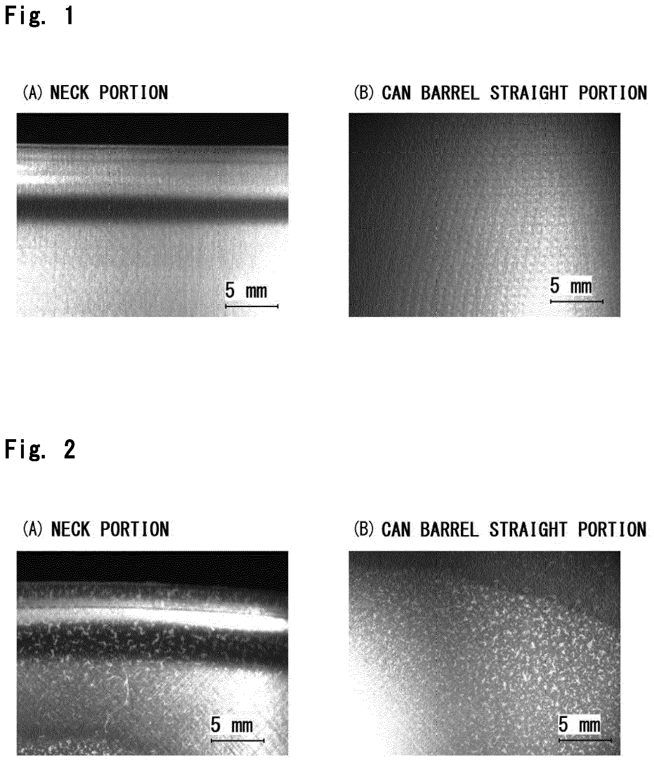

Fig. 1 (Example 1) and Fig. 2 (Comparative Example 4) each consists of a set of photographs showing a can inner surface after six months. Figs. 1(A) and 2(A) show the neck portions and Figs. 1(B) and 2 (B) show the can barrel straight portions.

### (Experimental Example 2)

The seamless cans manufactured in Example 1 were filled with white wine (pH: 3.2, free sulfurous acid concentration: 30 ppm, total sulfurous acid concentration: 105 ppm), each of which was sealed with any of three types of aluminum can lids having inner surfaces applied with different coating films as shown in Table 2 below. The packed wine was stored for three months under a constant temperature condition of 23°C or 37°C, and then, the can inner surface was observed. For the lids with the polyester/phenolic coating films, corrosion was evidently prevented. On the lid with the inner coating film having a minimal thickness of 5 µm, corrosion occurred after three months under a constant temperature condition of 37°C. As for the lid with the inner coating film having a minimal thickness of 8 µm, no corrosion occurred in three month under the constant temperature condition of 23°C or 37°C.

**[Table 2]**

| Lid type | Incidence of corrosion on lid | |
|---|---|---|
| | After 3 months at 23°C | After 3 months at 37°C |
| Coating film on inner surface (epoxy/acrylic coating film); minimal thickness: 8 µm | 5/9 | 6/9 |
| Coating film on inner surface (polyester/phenolic coating film); minimal thickness: 5 µm | 0/9 | 2/9 |
| Coating film on inner surface (polyester/phenolic coating film); minimal thickness: 8 µm | 0/9 | 0/9 |

### (Experimental Example 3)

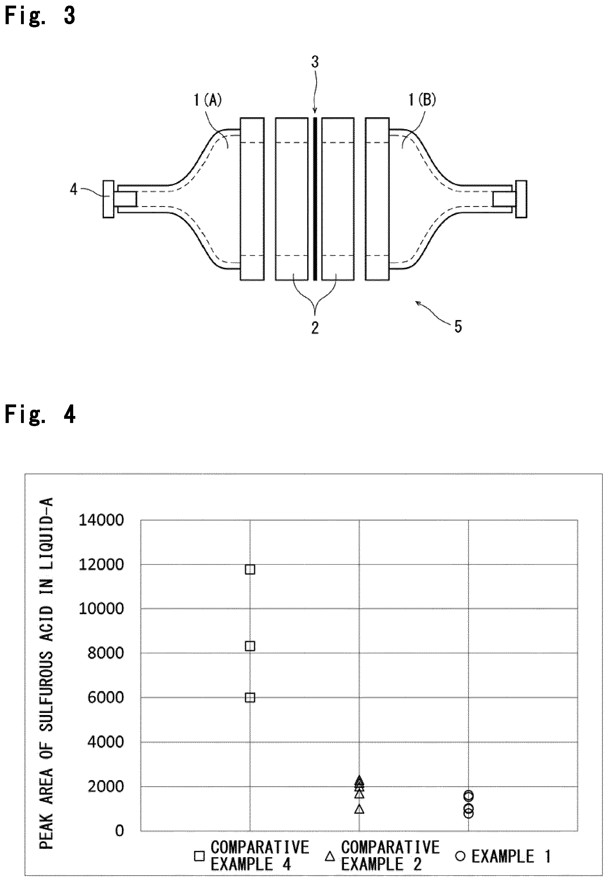

An inner surface resin film on the can barrel was isolated from each of the seamless cans in Example 1, Comparative Example 2 and Comparative Example 4 so as to compare the amount of sulfurous acid permeation by using a spherical glass column chromatographic tube (OF-30 supplied by AS ONE Corporation) shown in Fig. 3.

An inner surface resin film 3 was fixed by sandwiching with a column 1(A) and a column 1(B) via packings 2 made of fluororubber. The column 1(A) was filled with pure water, the column 1(B) was filled with a citric acid solution containing sodium sulfite (pH:3.1, total sulfurous acid concentration: 500 ppm), and sealed with septums 4 made of silicon rubber.

After a one-week storage under a constant temperature condition of 23°C, sulfurous acid concentration in the pure water filled in the column 1(A) was measured.

An ion chromatograph (ICS-2100 supplied by ThermoFisher Scientific) was used for sulfurous acid concentration determination. The results are shown in Fig. 4.

The seamless can of Comparative Example 4 had an epoxy/acrylic coating film, while each of the seamless cans of Example 1 and Comparative Example 2 had a polyester film with a minimal thickness of not less than 4 µm. Evaluation performed on the three types of inner surface resin films shows that permeation of sulfurous acid through the seamless cans of Example 1 and Comparative Example 2 was prevented in comparison with that of the seamless can of Comparative Example 4.

### (Experimental Example 4)

Each of the containers of Example 1 and Comparative Examples 1-5 shown in Table 1 was filled with white wine (pH: 3.2, free sulfurous acid concentration: 30 ppm, total sulfurous acid concentration: 105 ppm) and sealed to be kept for three months under a constant temperature condition of 23°C, and then, a sensory evaluation of the wine was conducted.

Deterioration in the flavor of the wine was prevented when a polyester film was applied on the can barrel and the film was thicker. The results of sensory evaluation and corrosion resistance evaluation are shown in Table 1.

### (Experimental Example 5)

Each of the containers of Example 1 and Comparative Example 4 shown in Table 1 was filled with distilled water, sterilized at 90°C for 30 minutes, and then, consumption of potassium permanganate in the content was measured by a titration method. Potassium permanganate consumption indicates the amount of potassium permanganate required to oxidize organic substances and reducible substances (oxidizable substances) in water, and the consumption is a measure of the dissolved amount of the component that is oxidizable (highly reactive).

In the container of Example 1, the potassium permanganate consumption was 0.1 to 0.2 ppm, whereas in the container of Comparative Example 4, it was 0.4 to 0.5 ppm. The seamless can having a polyester resin coating as shown in Example 1 is considered to have a flavor retention superior to that of the seamless can having an epoxy/acrylic coating film as shown in Comparative Example 4, because the seamless can of Example 1 allows less elution of oxidizable (highly reactive) organic component that may impair the wine flavor.

### Explanations of Letters or Numerals:

- 1(A), 1(B):: Columns
- 2:: Packing
- 3:: Inner surface resin film
- 4:: Septum
- 5:: Column chromatographic tube

## Claims

1. An aluminum wine container including an aluminum can body having a barrel portion, and an aluminum can lid that covers an opening of the can body,
wherein the aluminum can body has an inner surface on which a polyester resin coating is formed, the coating has a thickness of not less than 4 µm at the barrel portion, and the aluminum can lid has an inner surface on which a coating film of a polyester/phenolic coating material having a thickness of not less than 6 µm is formed.

2. The aluminum wine container according to claim 1, wherein the polyester resin coating at the barrel portion has a thickness in the range of 4 to 30 µm.

3. The aluminum wine container according to claim 1 or 2, wherein the coating film on the can lid has a thickness in the range of 6 to 20 µm.

4. The aluminum wine container according to any one of claims 1 to 3, wherein the polyester resin coating includes an ethylene terephthalate-based polyester resin.

5. The aluminum wine container according to any one of claims 1 to 4, wherein the polyester/phenolic coating material includes a coating composition containing a polyester resin as a base resin and a resol-type phenol resin as a curing agent.

6. The aluminum wine container according to any one of claims 1 to 5, wherein the can body is a seamless can shaped by drawing, bend-stretching and/or ironing a polyester resin coated aluminum sheet.

7. The aluminum wine container according to any one of claims 1 to 6, wherein the can lid is an easy opening end with a stay-on tab.

8. Packed wine, which is prepared by filling the aluminum container according to any one of claims 1 to 7 with wine and sealing the container.

9. The packed wine according to claim 8, wherein the wine contains sulfite.
